# EUROPEAN PATENT APPLICATION

(11) **EP 4 593 161 A1**
(43) Date of publication of application: **30.07.2025**
(21) Application number: 24222990.4
(22) Date of filing: 23.12.2024
(51) Int. Cl.: H01M 10/6556, H01M 10/6568, H01M 10/625, H01M 50/51, H01M 10/613

(54) **BATTERY PACK AND BATTERY SYSTEM THEREOF**

(30) Priority: 28.12.2023 US 202318399636
(71) Applicant: Xing Power Inc., Victoria, Mahé (SC)
(72) Inventor: LEE, Hung-Chi, 333 Taoyuan City (TW); TU, Kai-Hsiang, 333 Taoyuan City (TW); HSU, Chia-Chen, 333 Taoyuan City (TW); KASHEL, Dmitry, 333 Taoyuan City (TW); WU, I-Jung, 333 Taoyuan City (TW)
(74) Representative: Straus, Alexander

(57) **Abstract**

A battery pack(12) includes a casing(18), a pipe assembly(26), and first, second and third battery modules(20, 22, 24) disposed within the casing(18). The pipe assembly(26) includes an input pipe(40), an output pipe set(50), a communication pipe set(48), and first, second, and third pipe sets(42, 44, 46). The first pipe set(42) is disposed at a first side portion of the casing(18) to be coupled to the input pipe(40) and the first battery modules(20). The second and third pipe sets(44, 46) are disposed at a second side portion of the casing(18) to be coupled to the second and third battery modules(22, 24), respectively. The output pipe set(50) is coupled to the second battery module(22) and the third battery module(24). The communication pipe set(48) is disposed at a back portion of the casing(18), coupled to the first battery module(20), and coupled in parallel to the second battery module(22) and the third battery module(24).

## Description

### Field of the Invention

The present disclosure relates to a battery pack utilizing a pipe assembly to be coupled to battery modules along a first side portion, a back portion and a second side portion of a casing sequentially and a battery system thereof according to the pre-characterizing clause of claims 1 and 11.

### Background of the Invention

The development of electric vehicles is progressing rapidly. For increasing fast charging and slow discharging capability, it is important to manage the heat generated during the charging and discharging processes of a battery pack.

Currently, there are two types of conventional cooled battery packs: a modular cooled battery pack and a non-modular cooled battery pack. The non-modular cooled battery pack may enclose several cell assemblies in one large fluid tank, which may make the entire pack bulky and heavy. Thus, the non-modular cooled battery pack is difficult to employ on various sizes of vehicle platforms. The modular cooled battery pack may solve the aforementioned problem of the non-modular cooled battery pack by making the fluid tank modularized (e.g., by enclosing each cell assembly in an independent fluid container to form one battery module). However, the modular cooled battery pack may require more connectors (e.g., cables, busbars, and fluid pipes) between the battery modules to cause a messy and exposed cable/busbar/pipe arrangement. Moreover, since the fluid pipes for heat dissipation of the battery modules are usually coupled in series connection in the prior art, uneven heat dissipation occurs due to excessive flow resistance or inconsistent flow rates of fluid in the fluid pipes. On the other hand, if the prior art adopts the design in which the fluid pipes are coupled in parallel connection, it may lead to a complex, time-consuming and strenuous parallel pipeline arrangement.

### Summary of the Invention

This in mind, the present invention aims at providing a battery pack utilizing a pipe assembly to be coupled to battery modules along a first side portion, a back portion and a second side portion of a casing sequentially and a battery system thereof. Via the aforesaid design in which the pipe assembly is coupled to the battery modules along the first side portion, the back portion and the second side portion sequentially in the casing without overlapping the pipes at the same side portion of the casing, the present disclosure can efficiently solve the messy and exposed pipe arrangement problem of the modular cooled battery pack aforementioned in the prior art, so as to greatly save the pipe routing space of the battery pack. This is achieved by a battery pack according to claim 1 and a battery system according to claim 11. The dependent claims pertain to corresponding further developments and improvements.

As will be seen more clearly from the detailed description following below, the claimed battery pack includes a casing, a plurality of first battery modules, a plurality of second battery modules, a plurality of third battery modules, and a pipe assembly. The casing has a first frame, a second frame, and at least one third frame sequentially arranged from up to down. The casing further has a front cover detachably covering a front portion of the casing, and the front cover has a fluid inlet and a fluid outlet. The plurality of first battery modules is disposed within the first frame. The plurality of second battery modules is disposed within the second frame. The plurality of third battery modules is disposed within the at least one third frame. The pipe assembly includes an input pipe, a first pipe set, a second pipe set, a third pipe set, an output pipe, and a communication pipe set. The input pipe is coupled to the fluid inlet. The first pipe set is disposed at a first side portion of the casing. The first pipe set is coupled to the input pipe and coupled in series to the plurality of first battery modules within the first frame. The second pipe set is disposed at a second side portion of the casing and coupled in series to the plurality of second battery modules within the second frame. The second side portion is opposite to the first side portion. The third pipe set is disposed at the second side portion of the casing and coupled in series to the plurality of third battery modules within the third frame. The output pipe set is coupled to the second battery module, the third battery module, and the fluid outlet. The communication pipe set is disposed at a back portion of the casing, coupled to the first battery module, and coupled in parallel to the second battery module and the third battery module.

Additionally, a battery system includes a battery pack, a pump, and a heat management module. The battery pack includes a casing, a plurality of first battery modules, a plurality of second battery modules, a plurality of third battery modules, and a pipe assembly. The casing has a first frame, a second frame, and at least one third frame sequentially arranged from up to down. The casing further has a front cover detachably covering a front portion of the casing, and the front cover has a fluid inlet and a fluid outlet. The plurality of first battery modules is disposed within the first frame. The plurality of second battery modules is disposed within the second frame. The plurality of third battery modules is disposed within the at least one third frame. The pipe assembly includes an input pipe, a first pipe set, a second pipe set, a third pipe set, an output pipe, and a communication pipe set. The input pipe is coupled to the fluid inlet. The first pipe set is disposed at a first side portion of the casing. The first pipe set is coupled to the input pipe and coupled in series to the plurality of first battery modules within the first frame. The second pipe set is disposed at a second side portion of the casing and coupled in series to the plurality of second battery modules within the second frame. The second side portion is opposite to the first side portion. The third pipe set is disposed at the second side portion of the casing and coupled in series to the plurality of third battery modules within the third frame. The output pipe set is coupled to the second battery module, the third battery module, and the fluid outlet. The communication pipe set is disposed at a back portion of the casing, coupled to the first battery module, and coupled in parallel to the second battery module and the third battery module. The pump is coupled to the fluid inlet and the fluid outlet. The thermal management module is coupled to the pump for thermal management of the battery pack in an immersion cooling manner by controlling the pump to pump a fluid into the battery pack.

### Brief Description of the Drawings

In the following, the invention is further illustrated by way of example, taking reference to the accompanying drawings thereof
FIG. 1 is a diagram of a battery system according to an embodiment of the present disclosure,
FIG. 2 is a diagram of a battery pack in FIG. 1 from another viewing angle,
FIG. 3 is a diagram of the battery pack in FIG. 2 from another viewing angle,
FIG. 4 is a diagram of the battery pack in FIG. 3 from another viewing angle, and
FIG. 5 is a diagram of the battery pack in FIG. 4 from another viewing angle.

### Detailed Description

The following disclosure contains specific information pertaining to exemplary implementations in the present disclosure. The drawings in the present disclosure and their accompanying detailed disclosure are directed to merely exemplary implementations. However, the present disclosure is not limited to merely these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

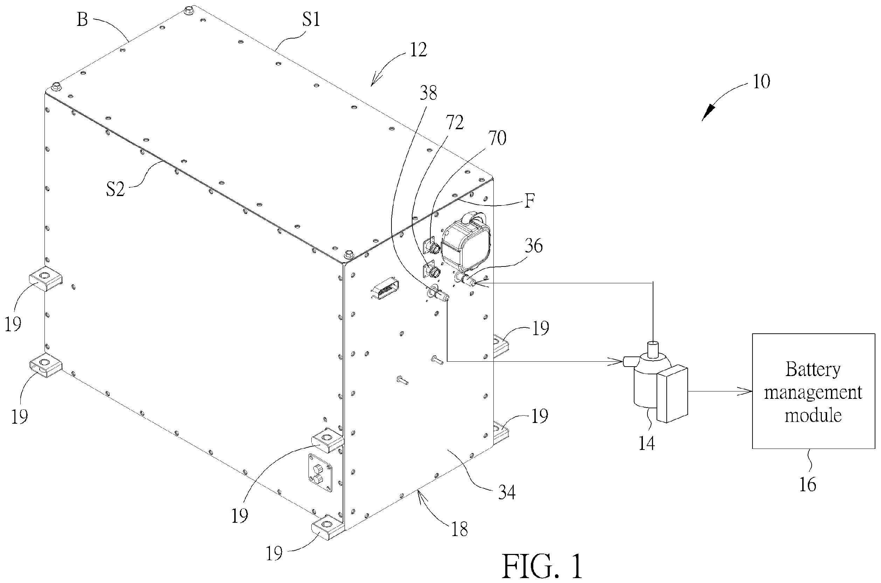

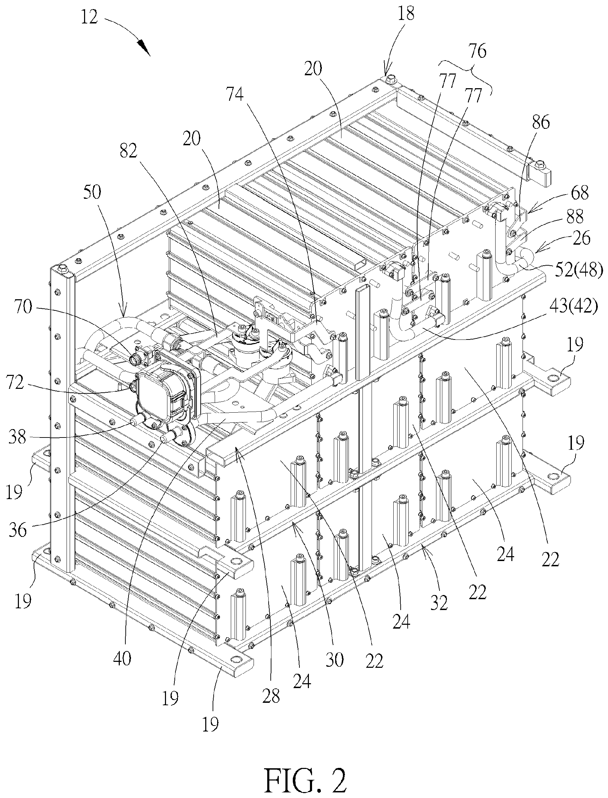

Please refer to FIG. 1 and FIG. 2. FIG. 1 is a diagram of a battery system 10 according to an embodiment of the present disclosure. FIG. 2 is a diagram of a battery pack 12 in FIG. 1 from another viewing angle. As shown in FIG. 1 and FIG. 2, the battery system 10 is preferably applied to an electric vehicle (not shown) for providing electric power to drive the electric vehicle and includes the battery pack 12, a pump 14 (briefly depicted in FIG. 1), and a thermal management module 16 (represented by a functional block for simplicity). For clearly showing internal components of the battery pack 12, all covers and some frame components of a casing 18 are omitted in FIG. 2.

The battery pack 12 includes the casing 18, a plurality of first battery modules 20, a plurality of second battery modules 22, a plurality of third battery modules 24, and a pipe assembly 26. The casing 18 has a first frame 28, a second frame 30, and at least one third frame 32 (one shown in FIG. 2, but not limited thereto, meaning that the number of layers of the frames depends on the practical assembly applications of the battery pack 12) sequentially arranged from up to down. Furthermore, as shown in FIGS. 1-2, at least one of the first frame 28, the second frame 30, and the third frame 32 of the casing 18 could has at least one outer protrusion 19. For example, in this embodiment, the second frame 30 and the third frame 32 could have four outer protrusions 19 respectively (but not limited thereto, meaning that the number of the outer protrusions 19 depends on the modularization needs of the battery system 10). The outer protrusion 19 could be connected to at least one another battery pack 12 (e.g., in a screw-locking manner) to form a larger battery pack assembly, so as to enhance the assembly convenience of the battery system 10.

Moreover, the casing 18 further has a front cover 34 detachably covering a front portion F of the casing 18, and the front cover 34 has a fluid inlet 36 and a fluid outlet 38 disposed thereon. The pump 14 is coupled to the fluid inlet 36 and the fluid outlet 38, and the thermal management module 16 could include electronic components (e.g., management circuit boards, flow meters, and temperature sensors, but not limited thereto) applied to thermal management of a battery pack for collecting heat dissipating information of battery cells and fluid in the battery modules. As such, the thermal management module 16 could be coupled to the pump 14 for thermal management of the battery pack 12 in an immersion cooling manner by controlling the pump 14 to pump the fluid into the battery pack 12, wherein the fluid could be preferably an inert dielectric fluid and may provide a fire suppression capability (but not limited thereto, meaning that the present disclosure could adopt other thermal management fluid, such as mineral oil, silicone oil, ester-based oil, or engineered fluid, etc.). As for the thermal management design of the thermal management module 16 and the fluid cooling process of the battery system 10, the related description is commonly seen in the prior art and omitted herein for simplicity.

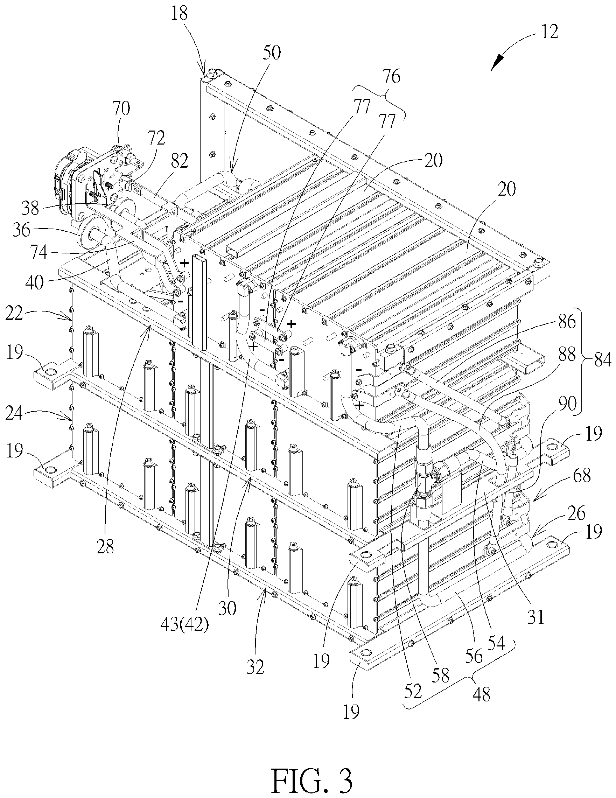

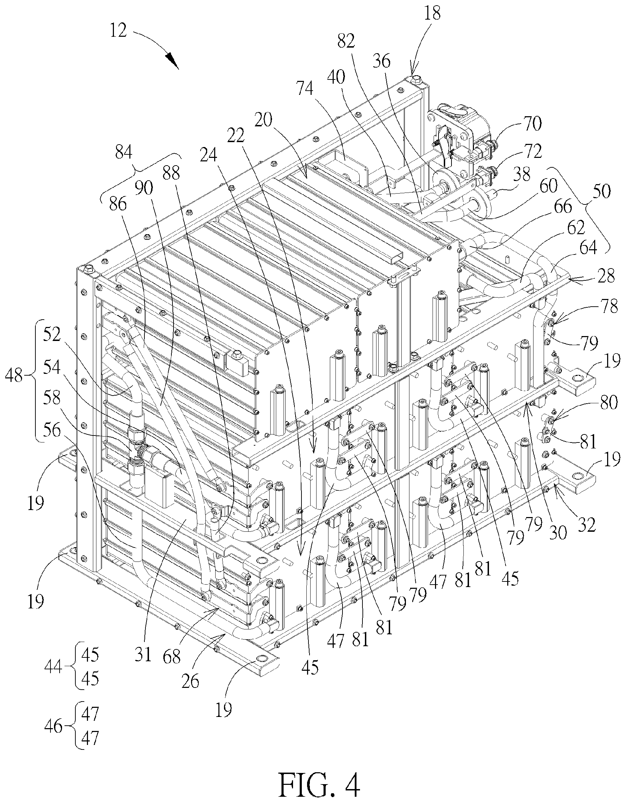

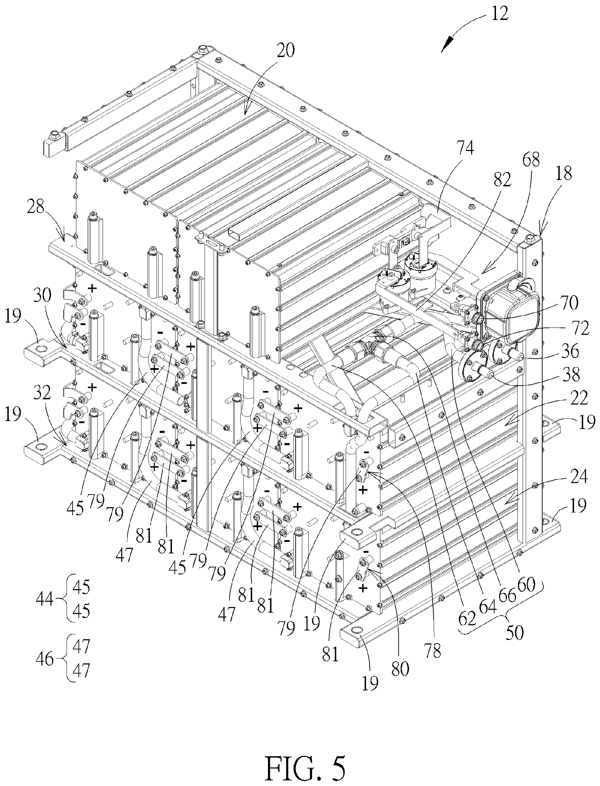

More detailed description for the pipe connection design of the pipe assembly 26 is provided as follows. Please refer to FIGS. 1-5. FIG. 3 is a diagram of the battery pack 12 in FIG. 2 from another viewing angle. FIG. 4 is a diagram of the battery pack 12 in FIG. 3 from another viewing angle. FIG. 5 is a diagram of the battery pack 12 in FIG. 4 from another viewing angle. For clearly showing internal components of the battery pack 12, some frame components of the casing 18 are omitted in FIGS. 3-5. In this embodiment, there could be preferably two first battery modules 20 disposed (e.g., arranged side by side, but not limited thereto) within the first frame 28, three second battery modules 22 disposed (e.g., arranged side by side, but not limited thereto) within the second frame 30 and three third battery modules 24 disposed (e.g., arranged side by side, but not limited thereto) within the third frame 32, but the present disclosure is not limited thereto, meaning that the actual mounting number of the first battery modules 20, the second battery modules 22, and the third battery modules 24 depends on the power requirements of the battery pack 12 and the number of pipes of the pipe assembly 26 is varied accordingly.

As shown in FIGS. 1-5, the pipe assembly 26 includes an input pipe 40, a first pipe set 42, a second pipe set 44, a third pipe set 46, a communication pipe set 48, and an output pipe set 50. The input pipe 40 is coupled to the fluid inlet 36. The first pipe set 42 is disposed at a first side portion S1 of the casing 18 and coupled in series (as shown in FIG. 2) to the plurality of first battery modules 20 within the first frame 28, for guiding the fluid to flow from the input pipe 40 into the plurality of first battery modules 20. The second pipe set 44 is disposed at a second side portion S2 of the casing 18 and coupled in series (as shown in FIG. 4) to the plurality of second battery modules 22 within the second frame 30, for guiding the fluid to flow into the plurality of second battery modules 22, wherein the second side portion S2 is opposite to the first side portion S 1. The third pipe set 46 is disposed at the second side portion S2 of the casing 18 and coupled in series (as shown in FIG. 4) to the plurality of third battery modules 24 within the third frame 32, for guiding the fluid to flow into the plurality of third battery modules 24.

In this embodiment, the first pipe set 42 could include one first pipe 43 for coupling to the two first battery modules 20 along with the input pipe 40 and the communication pipe set 48 to make the fluid flow through the two first battery modules 20 sequentially (as shown in FIG. 2). The second pipe set 44 could include two second pipes 45 for coupling to the three second battery modules 22 along with the communication pipe set 48 and the output pipe set 50 to make the fluid flow through the three second battery modules 22 sequentially (as shown in FIG. 4). The third pipe set 46 could include two third pipes 47 for coupling to the three third battery modules 24 along with the communication pipe set 48 and the output pipe set 50 to make the fluid flow through the three third battery modules 24 sequentially (as shown in FIG. 4).

Furthermore, the communication pipe set 48 is disposed at a back portion B of the casing 18, coupled to the first battery module 20, and coupled in parallel to the second battery module 22 and the third battery module 24. To be more specific, in this embodiment, the communication pipe set 48 includes a first communication pipe 52, a second communication pipe 54, a third communication pipe 56, and a three-way valve 58. As shown in FIGS. 3-4, the first communication pipe 52 is coupled to the first battery module 20, the second communication pipe 54 is coupled to the second battery module 22, the third communication pipe 56 is coupled to the third battery module 24, and the three-way valve 58 is coupled to the first communication pipe 52, the second communication pipe 54, and the third communication pipe 56, respectively. As such, the communication pipe set 48 can guide the fluid from the first communication pipe 52 to the second communication pipe 54 and the third communication pipe 56 in parallel connection via the three-way valve 58, so as to make the fluid flow at the consistent flow rate in the second battery modules 22 and the third battery modules 24 for achieving the even heat dissipation effect.

In practical application, a number of curves of the second communication pipe 54 (three curves shown in FIG. 4, but not limited thereto) with a shorter length could be preferably greater than a number of curves of the third communication pipe 56 (two curves shown in FIG. 4, but not limited thereto) with a longer length, so as to achieve the flow-resistance adjustment effect for ensuring that the fluid in the second communication pipe 54 and the third communication pipe 56 can enter the second battery module 22 and the third battery module 24 at the same flow rate. Moreover, in this embodiment, as shown in FIGS. 3-4, the third communication pipe 56 passes through a transverse beam 31 of the second frame 30 to be coupled to the third battery module 24 for achieving the pipe management effect, so as to solve the prior art problem of messy and exposed pipes and save the pipe routing space in the casing 18. The aforesaid pipe passing design could also be applied to other pipes in the battery pack 12, and the related description could be reasoned by analogy according to FIGS. 3-4 and omitted herein.

As for the output configuration of the output pipe set 50, please refer to FIGS. 4-5. As shown in FIGS. 4-5, the output pipe set 50 is coupled to the second battery module 22, the third battery module 24, and the fluid outlet 38 for guiding the fluid to flow out of the fluid outlet 38. To be more specific, in this embodiment, the output pipe set 50 includes a first output pipe 60, a second output pipe 62, a third output pipe 64, and a three-way valve 66. The first output pipe 60 is coupled to the fluid outlet 38, the second output pipe 62 is coupled to the second battery module 22, the third output pipe 64 is coupled to the third battery module 24, and the three-way valve 66 is coupled to the first output pipe 60, the second output pipe 62, and the third output pipe 64. Accordingly, the output pipe set 50 can guide the fluid from the second output pipe 62 and the third output pipe 64 to the first output pipe 60 via the three-way valve 66 for fluid output.

To be noted, for further ensuring that the fluid flow at the consistent flow rate in the second battery modules 22 and the third battery modules 24, a total pipe length of the second pipe set 44 and the second output pipe 62 could be preferably equal to a total pipe length of the third pipe set 46 and the third output pipe 64, so as to make the fluid flow in the second pipe set 44, the third pipe set 46 and the output pipe set 50 at the consistent flow rate for achieving the even heat dissipation effect. In addition, the curve design and the pipe passing design mentioned above could also be applied to the output pipe set 50, and the related description could be reasoned by analogy according to FIGS. 3-4 and omitted herein for simplicity.

In summary, via the aforesaid design in which the pipe assembly is coupled to the first battery modules, the second battery modules, and the third battery modules along the first side portion, the back portion and the second side portion sequentially in the casing without overlapping the pipes at the same side portion of the casing, the present disclosure can efficiently solve the messy and exposed pipe arrangement problem of the modular cooled battery pack aforementioned in the prior art, so as to greatly save the pipe routing space of the battery pack.

Furthermore, the present disclosure adopts the design in which the first pipe set is coupled in series to the first battery modules and the second pipe set and the third pipe set are coupled to the first pipe set in parallel connection, to solve the prior art problem of excessive flow resistance or inconsistent flow rates of the fluid in the fluid pipes in series connection or the complex, time-consuming, and strenuous pipeline arrangement caused by all the fluid pipes coupled in parallel connection. In such a manner, the present disclosure not only improves the heat dissipation efficiency of the battery pack and maintains the temperature uniformity between battery cells in the battery pack, but also simplifies the pipe configuration in the battery pack.

It should be mentioned that the aforesaid routing design could also be applied to electrical connection between the battery modules of the battery pack. For example, as shown in FIGS. 1-5, the battery pack 12 further includes a busbar connection assembly 68, and the front cover 34 further has a positive terminal 70 and a negative terminal 72. In this embodiment, the busbar connection assembly 68 could include a positive busbar 74, a first busbar set 76, a second busbar set 78, a third busbar set 80, a negative busbar 82, and a cable set 84. The positive busbar 74 is electrically connected to the positive terminal 70. The first busbar set 76 is disposed at the first side portion S 1 and electrically connected in series to the positive busbar 74 and the first battery modules 20. The second busbar set 78 is disposed at the second side portion S2 and electrically connected in series to the second battery modules 22. The third busbar set 80 is disposed at the second side portion S2 and electrically connected in series to the third battery modules 24. The negative busbar 82 is electrically connected to the negative terminal 72.

In this embodiment, the first busbar set 76 could include two first busbars 77, the second busbar set 78 could include five second busbars 79, and the third busbar set 80 could include five third busbars 81, for establishing series connection of the two first battery modules 20, the three second battery modules 22, and the three third battery modules cooperatively with the positive busbar 74, the cable set 84, and the negative busbar 82. As shown in FIG. 3 and 5, the first busbar 77 at an upper position is coupled to a negative pole of the first battery module 20 located at a front position on the first frame 28 and a positive pole of the first battery module 20 located at a back position on the first frame 28 respectively, and the first busbar 77 at a lower position is coupled to a positive pole of the first battery module 20 located at the front position on the first frame 28 and a negative pole of the first battery module 20 located at the back position on the first frame 28 respectively. As for the series connection of the second busbar set 78 and the three second battery modules 22 and the series connection of the third busbar set 80 and the three third battery modules 24, the related description could be reasoned by analogy according to FIGS. 3 and 5 and omitted herein for simplicity.

Furthermore, the cable set 84 is disposed at the back portion B of the casing 18. To be more specific, as shown in FIGS. 3-4, the cable set 84 includes a first cable unit 86, a second cable unit 88, and a third cable unit 90. The first cable unit 86 (preferably composed of a cable and two busbars, but not limited thereof) is electrically connected to the first battery module 20 located at the back position on the first frame 28 and the second battery module 22 located at a back position on the second frame 30. The second cable unit 88 (preferably composed of a cable and two busbars, but not limited thereof) is electrically connected to the second battery module 22 located at the back position on the second frame 30 and the third battery module 24 located at a back position on the third frame 32. The third cable unit 90 (preferably composed of a cable and two busbars, but not limited thereof) is electrically connected to the third battery module 24 located at the back position on the third frame 32 and the first battery module 20 located at the back position on the first frame 28.

As such, the cable set 84 can establish the series connection between the first busbar set 76 and the second busbar set 78, the series connection between the second busbar set 78 and the third busbar set 80, and the series connection between the third busbar set 80 and the first busbar set 76, respectively. Moreover, in this embodiment, as shown in FIGS. 3-4, the second cable unit 88 passes through the transverse beam 31 to be electrically connected to the third battery module 24, and the third cable unit 90 passes through the transverse beam 31 to be electrically connected to the first battery module 20 for achieving the cable management effect. The aforesaid cable passing design could also be applied to other cables in the battery pack 12, and the related description could be reasoned by analogy according to FIGS. 3-4 and omitted herein for simplicity.

In summary, via the aforesaid design in which the busbar connection assembly is coupled in series to the first battery modules, the second battery modules, and the third battery modules around the casing without overlapping the busbars and cables at the same side portion of the casing, the present disclosure can efficiently solve the messy and exposed cable/busbar arrangement problem of the modular cooled battery pack aforementioned in the prior art, so as to greatly save the cable/busbar routing space of the battery pack.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A battery pack (12) comprising:
a casing (18) having a first frame (28), a second frame (30), and at least one third frame (32) sequentially arranged from up to down, the casing (18) further having a front cover (34) detachably covering a front portion of the casing (18), and the front cover (34) having a fluid inlet (36) and a fluid outlet (38);
a plurality of first battery modules (20) disposed within the first frame (28);
a plurality of second battery modules (22) disposed within the second frame (30);
a plurality of third battery modules (24) disposed within the at least one third frame (32); and **characterized by**:
a pipe assembly (26) comprising:
an input pipe (40) coupled to the fluid inlet (36);
a first pipe set (42) disposed at a first side portion of the casing (18), the first pipe set (42) being coupled to the input pipe (40) and coupled in series to the plurality of first battery modules (20) within the first frame (28);
a second pipe set (44) disposed at a second side portion of the casing (18) being opposite to the first side portion and coupled in series to the plurality of second battery modules (22) within the second frame (30);
a third pipe set (46) disposed at the second side portion of the casing (18) and coupled in series to the plurality of third battery modules (24) within the at least one third frame (32);
an output pipe set (50) coupled to the second battery module (22), the third battery module (24), and the fluid outlet (38); and
a communication pipe set (48) disposed at a back portion of the casing (18), coupled to the first battery module (20), and coupled in parallel to the second battery module (22) and the third battery module (24).

2. The battery pack (12) of claim 1, **characterized in that** the communication pipe set (48) comprises:
a first communication pipe (52) coupled to the first battery module (20);
a second communication pipe (54) coupled to the second battery module (22);
a third communication pipe (56) coupled to the third battery module (24); and
a three-way valve (58) coupled to the first communication pipe (52), the second communication pipe (54), and the third communication pipe (56).

3. The battery pack (12) of claim 2, **characterized in that**:
a number of curves of the second communication pipe (54) is greater than a number of curves of the third communication pipe (56); or
the third communication pipe (56) passes through a transverse beam (31) of the second frame (30) to be coupled to the third battery module (24).

4. The battery pack (12) of claim 1, **characterized in that** the output pipe set (50) comprises:
a first output pipe (60) coupled to the fluid outlet (38);
a second output pipe (62) coupled to the second battery module (22);
a third output pipe (64) coupled to the third battery module (24); and
a three-way valve (66) coupled to the first output pipe (60), the second output pipe (62), and the third output pipe (64).

5. The battery pack (12) of claim 4, **characterized in that** a total pipe length of the second pipe set (44) and the second output pipe (62) is equal to a total pipe length of the third pipe set (46) and the third output pipe (64).

6. The battery pack (12) of claim 4, **characterized in that** a number of curves of the second output pipe (62) is greater than a number of curves of the third output pipe (64).

7. The battery pack (12) of claim 1, **characterized in that** the battery pack (12) further comprises a busbar connection assembly (68), the front cover (34) further has a positive terminal (70) and a negative terminal (72), and the busbar connection assembly (68) comprises:
a positive busbar (74) electrically connected to the positive terminal (70);
a first busbar set (76) disposed at the first side portion and electrically connected in series to the positive busbar (74) and the plurality of first battery modules (20);
a second busbar set (78) disposed at the second side portion and electrically connected in series to the plurality of second battery modules (22);
a third busbar set (80) disposed at the second side portion and electrically connected in series to the plurality of third battery modules (24);
a negative busbar (82) electrically connected to the negative terminal (72); and
a cable set (84) disposed at the back portion to respectively establish series connection between the first busbar set (76) and the second busbar set (78), series connection between the second busbar set (78) and the third busbar set (80), and series connection between the third busbar set (80) and the first busbar set (76).

8. The battery pack (12) of claim 7, **characterized in that** the cable set (84) comprises:
a first cable unit (86) electrically connected to the first battery module (20) and the second battery module (22);
a second cable unit (88) electrically connected to the second battery module (22) and the third battery module (24); and
a third cable unit (90) electrically connected to the third battery module (24) and the first battery module (20);
wherein the second cable unit (88) passes through the transverse beam (31) to be electrically connected to the third battery module (24), and the third cable unit (90) passes through the transverse beam (31) to be electrically connected to the first busbar set (76).

9. The battery pack (12) of claim 1, **characterized in that** at least one of the first frame (28), the second frame (30), and the at least one third frame (32) has at least one outer protrusion (19) to be connected to at least one another battery pack (12) to form a battery pack assembly.

10. A battery system (10) comprising:
a battery pack (12) comprising:
a casing (18) having a first frame (28), a second frame (30), and at least one third frame (32) sequentially arranged from up to down, the casing (18) further having a front cover (34) detachably covering a front portion of the casing (18), and the front cover (34) having a fluid inlet (36) and a fluid outlet (38);
a plurality of first battery modules (20) disposed within the first frame (28);
a plurality of second battery modules (22) disposed within the second frame (30);
a plurality of third battery modules (24) disposed within the at least one third frame (32); and **characterized by**:
a pipe assembly (26) comprising:
an input pipe (40) coupled to the fluid inlet (36);
a first pipe set (42) disposed at a first side portion of the casing (18), the first pipe set (42) being coupled to the input pipe (40) and coupled in series to the plurality of first battery modules (20) within the first frame (28);
a second pipe set (44) disposed at a second side portion of the casing (18) being opposite to the first side portion and coupled in series to the plurality of second battery modules (22) within the second frame (30);
a third pipe set (46) disposed at the second side portion of the casing (18) and coupled in series to the plurality of third battery modules (24) within the at least one third frame (32);
an output pipe set (50) coupled to the second battery module (22), the third battery module (24), and the fluid outlet (38); and
a communication pipe set (48) disposed at a back portion of the casing (18), coupled to the first battery module (20), and coupled in parallel to the second battery module (22) and the third battery module (24);
a pump (14) coupled to the fluid inlet (36) and the fluid outlet (38); and
a thermal management module (16) coupled to the pump (14) for thermal management of the battery pack (12) in an immersion cooling manner by controlling the pump (14) to pump a fluid into the battery pack (12).

11. The battery system (10) of claim 10, **characterized in that** the communication pipe set (48) comprises:
a first communication pipe (52) coupled to the first battery module (20);
a second communication pipe (54) coupled to the second battery module (22);
a third communication pipe (56) coupled to the third battery module (24); and
a three-way valve (58) coupled to the first communication pipe (52), the second communication pipe (54), and the third communication pipe (56).

12. The battery system (10) of claim 11, **characterized in that**:
a number of curves of the second communication pipe (54) is greater than a number of curves of the third communication pipe (56); or
the third communication pipe (56) passes through a transverse beam (31) of the second frame (30) to be coupled to the third battery module (24).

13. The battery system (10) of claim 10, **characterized in that** the output pipe set (50) comprises:
a first output pipe (60) coupled to the fluid outlet (38);
a second output pipe (62) coupled to the second battery module (22);
a third output pipe (64) coupled to the third battery module (24); and
a three-way valve (66) coupled to the first output pipe (60), the second output pipe (62), and the third output pipe (64).

14. The battery system (10) of claim 13, **characterized in that** a total pipe length of the second pipe set (44) and the second output pipe (62) is equal to a total pipe length of the third pipe set (46) and the third output pipe (64).

15. The battery system (10) of claim 13, **characterized in that** a number of curves of the second output pipe (62) is greater than a number of curves of the third output pipe (64).
